# EUROPÄISCHE PATENTSCHRIFT

(11) **EP 4 655 764 B1**
(45) Veröffentlichungstag und Bekanntmachung des Hinweises auf die Patenterteilung: **23.09.2026**
(21) Anmeldenummer: 24700428.6
(22) Anmeldetag: 11.01.2024
(51) Int. Cl.: G06V 10/772, G06V 10/776, G06T 11/00, G06V 10/764, G06V 10/82, G06V 20/58

(54) **ERMITTELN VON SYSTEMATISCHEN FEHLERN BEI BILDKLASSIFIKATOREN**
DETERMINING SYSTEMATIC ERRORS OF IMAGE CLASSIFIERS
DÉTERMINATION D'ERREURS SYSTÉMATIQUES DE CLASSIFICATEURS D'IMAGE

(30) Priorität: 25.01.2023 DE 102023200586
(43) Veröffentlichungstag der Anmeldung: 03.12.2025
(73) Patentinhaber: Robert Bosch GmbH, 70442 Stuttgart (DE)
(72) Erfinder: HUA, Nian, 71106 Magstadt (DE); HUTMACHER, Robin, 71272 Renningen (DE); METZEN, Jan Hendrik, 71034 Boeblingen (DE); ZHANG, Dan, 71229 Leonberg (DE)
(86) Internationale Anmeldenummer: PCT/EP2024/050546
(87) Internationale Veröffentlichungsnummer: WO 2024/156520

(56) Entgegenhaltungen:
- OLIVIA WILES ET AL: "Discovering Bugs in Vision Models using Off-the-shelf Image Generation and Captioning", ARXIV.ORG, CORNELL UNIVERSITY LIBRARY, 201 OLIN LIBRARY CORNELL UNIVERSITY ITHACA, NY 14853, 18 August 2022 (2022-08-18), XP091297368
- CAI JINKANG ET AL: "A Survey on Data-Driven Scenario Generation for Automated Vehicle Testing", MACHINES, vol. 10, no. 11, 21 November 2022 (2022-11-21), pages 1101, XP093121487, ISSN: 2075-1702, DOI: 10.3390/machines10111101
- YUNHAO GE ET AL: "DALL-E for Detection: Language-driven Context Image Synthesis for Object Detection", ARXIV.ORG, CORNELL UNIVERSITY LIBRARY, 201 OLIN LIBRARY CORNELL UNIVERSITY ITHACA, NY 14853, 20 June 2022 (2022-06-20), XP091254609
- IRENA GAO ET AL: "Adaptive Testing of Computer Vision Models", ARXIV.ORG, CORNELL UNIVERSITY LIBRARY, 201 OLIN LIBRARY CORNELL UNIVERSITY ITHACA, NY 14853, 6 December 2022 (2022-12-06), XP091387408
- NAZNEEN RAJANI ET AL: "SEAL : Interactive Tool for Systematic Error Analysis and Labeling", ARXIV.ORG, CORNELL UNIVERSITY LIBRARY, 201 OLIN LIBRARY CORNELL UNIVERSITY ITHACA, NY 14853, 11 October 2022 (2022-10-11), XP091341929

## Beschreibung

Die Erfindung betrifft ein computerimplementiertes Verfahren und ein System zum Ermitteln mindestens eines systematischen Fehlers bei der Klassifikation von Bildern in mindestens eine Bildkategorie durch einen Klassifizierungsalgorithmus.

### Stand der Technik

Bildklassifizierung ist aus dem Stand der Technik hinreichend bekannt und betrifft die Aufgabe, Information aus einem Bild zu extrahieren, um anhand dieser Informationen eine Zuordnung des Bildes zu einer bestimmten Bildkategorie und/oder Bildklasse zu ermöglichen. Das resultierende Cluster aus einer solchen Bildklassifizierung kann verwendet werden, um beispielsweise thematische Kategorien zu erstellen.

OLIVIA WILES ET AL.: "Discovering Bugs in Vision Models using Off-the-shelf Image Generation and Captioning", arXiv.org, Cornell University Library, 201 Olin Library, Cornell University, Ithaca, NY 14853, 18. August 2022, offenbart ein Verfahren zum automatisierten Auffinden von Fehlklassifikationen in Bildverarbeitungsmodellen unter realitätsnahen Bedingungen. Hierbei werden vortrainierte Text-zu-Bild- und Bild-zu-Text-Modelle eingesetzt, um synthetische, jedoch realistische Eingabedaten auf Basis bekannter Ground-Truth-Labels zu erzeugen. Fehlklassifizierte Eingaben werden gruppiert und mittels eines Bildbeschreibungsmodells semantisch beschrieben. Die so gewonnenen Beschreibungen werden verwendet, um weitere Eingabedaten zu generieren und gezielt Szenarien zu identifizieren, die überdurchschnittlich häufig Fehlklassifikationen verursachen. Der Ansatz ermöglicht die systematische Analyse von auf ImageNet trainierten Klassifikatoren, das Aufdecken von Scheinkorrelationen sowie die skalierbare Erzeugung adversarieller Datensätze zur gezielten Untersuchung spezifischer Modellarchitekturen.

Die Klassifizierung von Bilddaten kann zwar grundsätzlich durch einen menschlichen Analysten erfolgen, wird jedoch zunehmend automatisiert und dabei durch maschinelle Lernansätze und/oder Verfahren der künstlichen Intelligenz durchgeführt. Bei den bekannten Verfahren zur Klassifizierung von Bilddaten kommt es aufgrund bildspezifischer und/oder umgebungsspezifischer und/oder verfahrensspezifischer Bedingungen immer wieder zu Fehlklassifikationen, indem Bilder, die eigentlich einer bestimmten Kategorie zuzuordnen sind, durch den Klassifizierungsalgorithmus einer anderen Kategorie zugeordnet werden.

Ein Grund für eine solche Fehlklassifizierung sind oftmals systematische Fehler eines zugrundeliegenden Klassifizierungsalgorithmus. Systematische Fehler beziehen sich hierbei zumeist auf eine bestimmte Untergruppe von Bildern, bei denen ein trainierter Klassifizierungsalgorithmus eine hohe Wahrscheinlichkeit einer Fehlklassifizierung ("Fehler") aufweist, wobei alle Bilder in der Untergruppe bestimmte Eigenschaften gemeinsam haben. Für einen menschlichen Analysten wäre diese Untergruppe hingegen problemlos der richtigen Kategorie zuzuordnen, da dieser über ein hierzu ausreichendes Domänenwissen bzw. Hintergrundwissen sowie einen hintergründigen Erfahrungsschatz verfügt. Die Untergruppe der durch den Klassifizierungsalgorithmus fehlerhaft klassifizierten Bilder erscheint also einem menschlichen Betrachter systematisch kohärent, wird jedoch von einem Algorithmus des maschinellen Lernens systematisch fehlerhaft klassifiziert.

Das Vorhandensein von systematischen Fehlern ist für den Einsatz von Klassifizierungsalgorithmen in sicherheitskritischen Bereichen problematisch. Somit ist die Anwendung von Methoden zur Überprüfung des jeweiligen Klassifizierungsalgorithmus auf solche systematischen Fehler insbesondere in diesen sicherheitsrelevanten Bereichen notwendig.

Es wurden bereits mehrere Methoden vorgeschlagen, um systematische Fehler eines Klassifizierungsalgorithmus zu erkennen. Eine dieser Methoden trägt beispielsweise den Namen DOMINO und passt ein fehlerbewusstes Mischungsmodell eines Klassifizierungsalgorithmus in den latenten Raum ein. Eine andere Methode bettet hingegen einen linearen Support-Vector-Machine-(SVM-) Klassifizierungsalgorithmus in den latenten Raum ein, um Bilddaten aus einer Klasse in richtig und falsch klassifiziert zu unterscheiden.

Im ersten Fall stellen Cluster mit hoher Fehlerquote systematische Fehler dar, während im zweiten Fall ein Vektor orthogonal zu einer SVM-Hyperebene in eine Richtung eines systematischen Fehlers zeigt. Die identifizierten, systematischen Fehler können interpretiert werden, indem eine Beschriftung erzeugt wird, die in der Nähe des Clustermittelpunkts eingebettet ist bzw. in die SVM-Richtung zeigt.

Die bekannten Methoden setzen jedoch das Vorhandensein eines markierten bzw. gelabelten Bilddatensatzes (sogenannte Hold-Out-Sets) voraus, der während des Trainings des Klassifizierungsalgorithmus nicht verwendet wurde. Zudem setzen die Methoden eine separate multimodale Einbettung, die die Einbettung von Bildern und Texten in einen gemeinsamen latenten, d.h. nicht unmittelbar sichtbar und/oder zu erfassen, Raum ermöglicht, voraus. Somit ist weiterhin ein Verbesserungspotenzial gegeben.

Der Erfindung liegt somit die Aufgabe zugrunde ein computerimplementiertes Verfahren und/oder ein System zum Ermitteln mindestens eines systematischen Fehlers bei der Klassifikation von Bildern in mindestens eine Bildkategorie durch einen Klassifizierungsalgorithmus bereitzustellen, das die Nachteile des Standes der Technik zumindest teilweise überwindet, und insbesondere ohne das Bereitstellen von gelabelten Bilddaten, die bislang nicht verwendet wurden, funktioniert.

Die Aufgabe wird gelöst durch ein computerimplementiertes Verfahren zum Ermitteln mindestens eines systematischen Fehlers bei der Klassifikation von Bildern in mindestens eine Bildkategorie durch einen Klassifizierungsalgorithmus gemäß den Merkmalen des Patentanspruchs 1. Ferner wird die Aufgabe gelöst durch ein System zum Ermitteln mindestens eines systematischen Fehlers bei der Klassifikation von Bildern in mindestens eine Bildkategorie durch einen Klassifizierungsalgorithmus gemäß den Merkmalen des Patentanspruchs 7.

### Offenbarung der Erfindung

Gemäß einem ersten Aspekt wird ein computerimplementiertes Verfahren zum Ermitteln mindestens eines systematischen Fehlers bei der Klassifikation von Bildern in mindestens eine Bildkategorie durch einen Klassifizierungsalgorithmus vorgeschlagen. Das Verfahren umfasst mindestens die nachfolgend beschriebenen Schritte: Bereitstellen (S1) mindestens einer Eingabetextdatei-Vorlage, die mindestens ein Schüsselwort umfasst, durch das die Eingabetextdatei-Vorlage einer vorbestimmten Bildkategorie einer Vielzahl von Bildkategorien zugeordnet ist, wobei die Eingabetextdatei-Vorlage Angaben über mindestens ein Bildmerkmal zu der vorbestimmten Bildkategorie und mindestens eine Werteangabe zu dem mindestens einen Bildmerkmal umfasst; Bereitstellen (S2) einer Liste von Bildmerkmalen und jeweiligen Werteangaben zu jedem der Bildmerkmale; Anwenden (S3) von kombinatorischem Testen zum Ermitteln einer vorbestimmten Sequenz von Testfällen, die jeweils eine Subkombination der in der Liste umfassten Bildmerkmalen und/oder Werteangaben umfassen; Generieren (S4) mindestens einer Bilddatei durch einen Text-In-Bildgenerierungsalgorithmus auf der Grundlage einer Eingabetextdatei, die durch ein Einsetzen der jeweiligen Subkombination der von der Liste umfassten Bildmerkmale und/oder Werteangaben in die mindestens eine Eingabetextdatei-Vorlage erzeugt wird, wobei die mindestens eine Bilddatei ein der vorbestimmten Bildkategorie zugeordnetes synthetisches Bild gemäß einem der Testfälle umfasst; Klassifizieren (S5) des generierten, synthetischen Bildes durch den Klassifizierungsalgorithmus in mindestens eine der Vielzahl von Bildkategorien; und Ermitteln (S6) des mindestens einen systematischen Fehlers durch Abgleichen der durch den Klassifizierungsalgorithmus klassifizieren Bildkategorie mit der vorbestimmten Bildkategorie, wobei für das kombinatorische Testen vom Benutzer eine Kardinaliät gewählt wird und die Sequenz von Testfällen so erzeugt wird, dass auf der Grundlage der bereitgestellten Liste von Bildmerkmalen und jeweiligen Werteangaben für jede beliebige Kombination von Werteangaben beliebiger Bildmerkmale, bei der die Zahl der Bildmerkmale der von Benutzer gewählten Kardinalität entspricht, mindestens ein Testfall existiert, der diese Kombination von Werteangaben aufweist, und dass kein Testfall für eine Kombination von Werteangaben erzeugt wird, bei der die Zahl der jeweiligen Bildmerkmale ungleich der vom Benutzer gewählten Kardinaliät ist.

Gemäß einem zweiten Aspekt wird ein System zum Ermitteln mindestens eines systematischen Fehlers bei der Klassifikation von Bildern in mindestens eine Bildkategorie durch einen Klassifizierungsalgorithmus vorgeschlagen. Das System umfasst eine Bereitstellungseinrichtung, die ausgebildet ist, mindestens eine Eingabetextdatei-Vorlage, die mindestens ein Schüsselwort umfasst, durch das die Eingabetextdatei-Vorlage einer vorbestimmten Bildkategorie einer Vielzahl von Bildkategorien zugeordnet ist, bereitzustellen, wobei die Eingabetextdatei-Vorlage Angaben über mindestens ein Bildmerkmal zu der vorbestimmten Bildkategorie und mindestens eine Werteangabe zu dem mindestens einen Bildmerkmal umfasst; und die ausgebildet ist, eine Liste von Bildmerkmalen und jeweiligen Werteangaben zu jedem der Bildmerkmale bereitzustellen; und eine Auswerte- und Recheneinrichtung, die eingerichtet ist: kombinatorisches Testen zum Ermitteln einer vorbestimmten Sequenz von Testfällen anzuwenden, die jeweils eine Subkombination der in der Liste umfassten Bildmerkmalen und/oder Werteangaben umfassen; einen Text-In-Bildgenerierungsalgorithmus auszuführen, um mindestens eine Bilddatei durch einen Text-In-Bildgenerierungsalgorithmus auf der Grundlage einer Eingabetextdatei zu generieren, die durch ein Einsetzen der jeweiligen Subkombination der von der Liste umfassten Bildmerkmale und/oder Werteangaben in die mindestens eine Eingabetextdatei-Vorlage erzeugt wird, wobei die mindestens eine Bilddatei ein der vorbestimmten Bildkategorie zugeordnetes synthetisches Bild gemäß einem der Testfälle umfasst; einen Klassifizierungsalgorithmus auszuführen, um das generierte, synthetische Bild in mindestens eine der Vielzahl von Bildkategorien zu klassifizieren; und den mindestens einen systematischen Fehler durch Abgleichen der durch den Klassifizierungsalgorithmus klassifizieren Bildkategorie mit der vorbestimmten Bildkategorie zu ermitteln, wobei für das kombinatorische Testen vom Benutzer eine Kardinaliät gewählt wird und die Sequenz von Testfällen so erzeugt wird, dass auf der Grundlage der bereitgestellten Liste von Bildmerkmalen und jeweiligen Werteangaben für jede beliebige Kombination von Werteangaben beliebiger Bildmerkmale, bei der die Zahl der Bildmerkmale der vom Benutzer gewählten Kardinalität entspricht, mindestens ein Testfall existiert, der diese Kombination von Werteangaben aufweist, und dass kein Testfall für eine Kombination von Werteangaben erzeugt wird, bei der die Zahl der jeweiligen Bildmerkmale ungleich der vom Benutzer gewählten Kardinaliät ist.

Das erfindungsgemäße Verfahren und/oder System ist dazu ausgebildet, anhand der generierten, synthetischen Bilddaten mindestens einen systematischen Fehler zu ermitteln, der bzw. die bei der Klassifizierung der synthetischen Bilddaten auftritt/auftreten. Somit ist es erfindungsgemäß nicht mehr notwendig, gelabelte Bilddaten, die noch nicht für eine Klassifizierung verwendet wurden, bereitzustellen, um eine Aussage über eine Fehleranfälligkeit einer bestimmten Klassifikation in eine bestimmte Bildkategorie zu erhalten. Die Bilddaten, um einen derartigen systematischen Fehler herauszufinden werden vielmehr durch den Text-In-Bildgenerierungsalgorithmus automatisch generiert und sind bereits qua Generation aufgrund der Schlüsselwortangabe einer gewissen Bildkategorie zugeordnet. Diese Zuordnung ist für den Klassifizierungsalgorithmus vor der eigentlichen Klassifikation eines derartigen, synthetisch generierten Bildes jedoch noch nicht bekannt, so dass ein derartiges, synthetisch generiertes Bild (ohne labeln durch einen Experten) für die Ermittlung des Fehlklassifizierungswertes verwendet werden kann.

Durch das erfindungsgemäße Anwenden von kombinatorischem Testen ist es zudem möglich, mehrere unabhängige systematische Fehler zu ermitteln, ohne dass hierzu jegliche statistisch mögliche Merkmals- und/oder Werteangabenkombination separat untersucht werden muss. Eine derartige vollständige statistische Untersuchung sämtlicher Möglichkeiten wäre nämlich insbesondere bei Eingabetextdatei mit vielen unterschiedlichen Angaben über Bildmerkmale und/oder bei vielen unterschiedlichen Werteangaben zu jedem der Bildmerkmale sehr zeit- und rechenintensiv. Mit zunehmender Anzahl an Bildmerkmalen und/oder Werteangaben steigt nämlich die Gesamtheit an möglichen Kombinationen exponentiell, was eine exponentiell steigende Rechenleistung nach sich zieht.

Hingegen bildet das kombinatorische Testen eine Approximation zu einer vollständigen kombinatorischen Explosion der Bildmerkmale und/oder Werteangaben. Dabei wird je nach Wahl einer beim kombinatorischen Testen bevorzugt zu wählenden Kardinalität n_{C} nämlich nur eine Submenge bzw. Teilmenge von Kombinationen möglicher Bildmerkmale und/oder Werteangaben in der Form der Sequenz von Testfällen ausgewählt, wobei zu jedem der Testfälle, d.h. zu jeder durch kombinatorisches Testen ausgewählten Kombination von Bildmerkmalen und/oder Werteangaben, jeweils eine Bilddatei generiert. Das kombinatorische Testen gibt vorzugsweise die Sequenz von Testfällen aus, wobei jede Merkmalskombination in die Eingabetextdatei eingesetzt wird, und so die darin spezifizierten Merkmalsangaben beim Generieren der Bilddaten verarbeitet werden.

Es versteht sich, dass es sich bei der mindestens einen Bilddatei auch um eine Videodatei handeln kann. Für zu generierende Videodateien gilt das in dieser Anmeldung Genannte entsprechend. Hierbei wird dann vorzugsweise ein Text-In-Video-Generierungsalgorithmus verwendet.

Die Hauptvorteile der Erfindung sind, dass sie nicht auf einer Metaheuristik basiert, die leicht in einem lokalen Optimum verharrt. Im Gegensatz dazu verwendet das Verfahren nach der Erfindung kombinatorische Tests, die eine gleichmäßige Abdeckung des operativen Designbereichs (d.h. der kombinatorischen Auswahl aus der Liste von Bildmerkmalen und zugehörigen Werteangaben) ermöglichen und insbesondere für große operative Designbereiche (d.h. mit einer Vielzahl von Bildmerkmalen und/oder Werteangaben) nachvollziehbar bleiben.

Das kombinatorische Testen zählt vorzugsweise zur Klasse von sogenannten Blackbox-Testmethoden, denn es leitet die Testfälle vorzugsweise nicht aus der Kenntnis des Innenlebens der Methode, der Komponente oder des Systems ab. Vielmehr besteht der Ansatz darin, Testfälle abzuleiten, in dem man systematisch verschiedene Input-Kombinationen bildet.

Das erfindungsgemäße Verfahren und/oder System kann/können beispielsweise im technischen Rahmen der generischen Gesichtserkennung und/oder im technischen Rahmen der Fahrzeugassistenz-Systematik und/oder im technischen Rahmen des autonomen Fahrens und/oder im technischen Rahmen der Computer-Vision und/oder im technischen Rahmen der Qualitätsüberwachung von Fertigungsbauteilen bei der automatischen optischen Inspektion und/oder im technischen Rahmen von sonstigen technischen Gebieten, bei denen Bilddaten ausgewertet und/oder kategorisiert und/oder klassifiziert werden, zur Anwendung kommen, um so Fehlklassifikationen zu erkennen und durch entsprechende Anpassung des Klassifikationsalgorithmus vorzugsweise für zukünftige Klassifizierungen zu vermeiden oder zumindest zu vermindern. Besonders bevorzugt kann die vorliegende Erfindung bei der Analyse von Daten verwendet werden, die von mindestens einem (Bild-) Sensor gewonnen werden. Der mindestens eine Sensor kann beispielsweise Messwerte einer Umgebung in Form von Sensorsignalen ermitteln. Derartige Sensorsignale können beispielsweise als insbesondere digitale Bilder und/oder Videos vorliegen. Der Sensor kann beispielsweise eine Kamera und/oder ein Lidar-Sensor und/oder ein Ultraschallsensor sein. Die Erfindung kann also beispielsweise für eine der Erfassung nachgeschaltete Bild- und/oder Video- und/oder Audioanalyse und dort zur Klassifizierung der erfassten Bilddaten eingesetzt werden, um eine Fehlklassifizierungsrate zu erkennen und diese so minimieren zu können. Die Erfindung kann insbesondere dazu verwendet werden, die Sensordaten zu klassifizieren, und/oder das Vorhandensein von Objekten in den Sensordaten zu erkennen, und/oder eine semantische Segmentierung der Sensordaten vorzunehmen, z.B. in Bezug auf Verkehrsschilder, Straßenoberflächen, Fußgänger und/oder Fahrzeuge. Dabei können erfindungsgemäß Anomalien in der Form mindestens eines systematischen Fehlers des technischen Systems bei der Klassifizierung der Sensordaten ermittelt werden.

Derartige Fehlklassifikationen bei der Klassifizierung von Bildern können grundsätzlich bei jeder beliebigen Klassifikation von Bildern durch einen Klassifizierungsalgorithmus für jede beliebige Bildkategorie auftreten. Beispielsweise können derartige Fehlklassifikationen bei der Klassifizierung von Gesichtern in vorbestimmte Kategorien, wie beispielsweise Alter, Geschlecht, Herkunft, Hautfarbe etc. auftreten. Beispielsweise können solche Fehlklassifikationen bei der Klassifikation von Bildern einer Verkehrssituation auftreten, wenn beispielsweise ein in dem Bild umfasstes Fahrzeug einer bestimmten Fahrzeugkategorie zugeordnet werden soll. Beispielsweise können solche Fehlklassifikationen bei der Klassifikation von Bildern von Fertigungsbauteilen im Zuge einer automatisierten Qualitätskontrolle und/oder Fertigungsüberwachung auftreten. Die Fehlklassifikation kann hervorgerufen werden, indem der Klassifizierungsalgorithmus beispielsweise periphere Bildinformationen, die zusätzlich zu dem zu klassifizierenden Objekt vorhanden sind, fehlerhaft interpretiert und/oder Hintergrundinformationen fehlerhaft beurteilt und/oder Bildeigenschaften und/oder Objekteigenschaften des zu klassifizierenden Objektes und/oder Objektausschnittes fehlerhaft beurteilt. Die Fehlbeurteilung kann beispielsweise durch fehlerhafte Erkennung und/oder Beurteilung von geometrischen und/oder optischen Eigenschaften des zu klassifizierenden Objektes und/oder der restlichen Bildinformationen hervorgerufen werden.

Die vorliegende Erfindung zielt also darauf ab, einen insbesondere systematischen Fehler bei der Klassifizierung von Bildern zu identifizieren, ohne dass ein beschrifteter bzw. gelabelter Holdout-Datensatz erforderlich ist. Dazu wird erfindungsgemäß ein Text-In-Bildgenerierungsalgorithmus verwendet, der beispielsweise durch den Open-Source-Algorithmus "Stable Diffusion" (https://huggingface.co/CompVis/stable-diffusion) implementiert sein kann. Ein derartiger Text-In-Bildgenerierungsalgorithmus bilden vorzugsweise Textaufforderungen und/oder Textvorgaben, beispielsweise repräsentiert durch das mindestens eine Schlüsselwort, auf eine Menge von Bildern ab, so dass die derart generierten Bilder vorzugsweise jeweils etwas abbilden, was einem Sinngehalt des mindestens einen Schlüsselwortes bzw. der Textanforderung entspricht bzw. wodurch dieser beschrieben wird. So kann für eine bestimmte Klasse c ∈ C eines Ausgaberaums des Klassifizierungsalgorithmus ein Bild, das in dieser Klasse C umfasst ist, beispielsweise durch eine Textaufforderung bzw. die Eingabetextdatei, wie "Ein Bild von c mit [...]" erzeugt werden. Dabei entspricht die Klasse C vorzugsweise derjenigen Klasse, deren systematischer Fehler bei der Klassifikation durch den Klassifizierungsalgorithmus identifiziert werden soll. In einer derartigen Textaufforderung können auch von dem mindestens einen Schlüsselwort abweichende Textbestandteile umfasst sein, die sich nicht auf die Klasse C beziehen. Diese Textbestandteile werden vorzugsweise von dem Text-In-Bildgenerierungsalgorithmus bei dem Generiere von Bildern als periphere Bildinformationen einbezogen. Besonders bevorzugt umfasst eine derartige Textaufforderung bzw. die Eingabetextdatei erfindungsgemäß neben der Bildkategorie weitere Angaben über mindestens ein Bildmerkmal zu der vorbestimmten Bildkategorie und mindestens eine Werteangabe zu dem mindestens einen Bildmerkmal, die bei der Generierung der Bilder direkt berücksichtigt und vorzugsweise in graphische Inhalte des Abbildungsraumes gewandet werden. So können durch die Wahl der Eingabetextdatei Bilder der Klasse C erzeugt werden, die vorzugsweise realistisch aussehen, aber in variablen und/oder untypischen Kontexten und/oder Posen und/oder Perspektiven und/oder sonstigen Gegebenheiten auftreten. Dies bestimmt sich vorzugsweise nach der Wahl der Angaben über mindestens ein Bildmerkmal und/oder nach der Werteangabe.

Werden die derart synthetisch generierten Bilder von dem Klassifizierungsalgorithmus nun zumindest mehrheitlich fehlerhaft klassifiziert, d.h. c ≠ c, kann der systematische Fehler und/oder eine Angabe über eine Fehlklassifikation ermittelt werden. Die generierten Bilder bilden dabei Kandidaten bzw. eine Bildaufforderung bzw. Bildprompt der Fehlklassifikation, aus denen der mindestens eine systematische Fehler des Klassifizierungsalgorithmus vorzugsweise ableitbar ist. Erfindungsgemäß ist vorgeschlagen, vorzugsweise eine Vielzahl von sich unterscheidenden Bilddaten zu generieren, die insbesondere die Sequenz an Testfällen aus den kombinatorischen Tests abbilden, d.h. gemäß der darin umfassten Bildmerkmale und/oder Werteangaben generiert wurden.

Der Hauptnachteil der bekannten Methoden zur Ermittlung eines Fehlklassifikationswertes besteht darin, dass sie für die Identifizierung von systematischen Fehlern die Verfügbarkeit eines gelabelten Holdout-Sets erfordern. Da systematische Fehler außerdem eher bei untypischen/seltenen Daten auftreten, erfordert ihre Identifizierung einen Holdout-Datensatz, der solche Fälle enthält, was als unrealistisch einzustufen ist. Im Gegensatz dazu arbeitet das erfindungsgemäße Verfahren mit synthetisch erzeugten Bilddaten, die keine manuelle Kennzeichnung bzw. Labeln erfordern. Darüber hinaus kann die Synthetisierung von einem Textprompt bzw. einer Eingabetextdatei abhängig gemacht werden. So können auch seltene und/oder unrealistische und/oder statistisch unwahrscheinliche Bildsituationen und/oder Abbildungssituationen durch eine entsprechend angepasste Textprompt synthetisiert werden. Das Verfahren automatisiert zudem zumindest teilweise den Prompt-Engineering-Aufwand, indem es kombinatorische Tests in Verbindung mit der Eingabetextdatei-Vorlage verwendet, in die pro Testfall die jeweiligen Bildmerkmale und zugehörigen Werteangaben eingesetzt werden, um die Bilddatei zu generieren. Das erfindungsgemäße Verfahren erfordert also nur den Zugang zu einem Text-In-Bild-Generierungsalgorithmus, während frühere Arbeiten im Stand der Technik den Zugang zu einer multimodalen Text-Bild-Einbettung und einer großen gelabelten Überbrückungsmenge erforderten.

Unter dem Begriff "Vielzahl" ist im Sinne der vorliegenden Offenbarung eine Mehrzahl von Bildkategorien zu verstehen. Mit anderen Worten sind unter der Formulierung "eine Vielzahl von Bildkategorien" mindestens zwei Bildkategorien zu verstehen.

In einer bevorzugten Ausführungsform werden mehrere Eingabetextdateien bereitgestellt, die jeweils das der vorbestimmten Bildkategorie zugeordnete Schlüsselwort umfassen, und bei denen die jeweilige Angabe über das mindestens eine Bildmerkmal und/oder die jeweilige mindestens eine Werteangabe zu dem jeweiligen Bildmerkmal gemäß der durch das kombinatorische Testen ermittelten Sequenz von Testfällen variiert wird/werden. Vorzugsweise wird zu jeder der mehreren Eingabetextdateien jeweils eine Bilddatei generiert, die ein der vorbestimmten Bildkategorie zugeordnetes synthetisches Bild mit dem jeweiligen mindestens einen Bildmerkmal und der jeweiligen mindestens einen Werteangabe umfasst. Vorzugsweise wird jedes der generierten, synthetischen Bilder durch den Klassifizierungsalgorithmus in mindestens eine der Vielzahl von Bildkategorien klassifiziert. Vorzugsweise wird zu jedem der klassifizierten Bilder der mindestens eine systematische Fehler ermittelt. Hierdurch können mehrere Bilder mit unterschiedlichen bzw. gegenübereinander variierten Bildmerkmalen und/oder mit unterschiedlichen bzw. gegenübereinander variierten Werteangaben generiert werden, so dass diese Bilder für den Klassifizierungsalgorithmus zur Klassifizierung verfügbar sind. Der Klassifizierungsalgorithmus klassifiziert vorzugsweise jedes der generierten Bilder. Werden zumindest einige der Bilder fehlerhaft klassifiziert, können beispielsweise Gemeinsamkeiten von Bildmerkmalen und/oder Werteangaben dieser fehlerhaft klassifizierten Bilder ermittelt werden. Derart können vorzugsweise auch mehrere systematische Fehler parallel zueinander ermittelt werden.

In einer bevorzugten Ausführungsform erfolgt ein Abspeichern des mindestens einen systematischen Fehlers zu der jeweiligen Eingabetextdatei und/oder zu der jeweils daraus generierten Bilddatei. Hierzu kann das System beispielsweise eine Speichereinrichtung umfassen, die zumindest zur temporären Datenspeicherung ausgebildet ist. Es kann sich um ein flüchtiges und/oder um ein nicht-flüchtiges Speichermedium handeln.

In einer bevorzugten Ausführungsform umfasst das Ermitteln des mindestens einen systematischen Fehlers ein Ermitteln eines jeweiligen Fehlklassifikationswertes und vorzugsweise ein Abgleiches des jeweils ermittelten Fehlklassifikationswertes mit einem vorbestimmten Fehlergrenzwert umfasst. Im Falle des Systems kann beispielsweise die Auswerte- und Recheneinrichtung dazu eingerichtet sein, den jeweiligen Fehlklassifikationswert zu ermitteln und diesen vorzugsweise mit dem vorbestimmten Fehlergrenzwert abzugleichen. Es ist alternativ möglich, dass das System hierzu eine weitere Ermittlungseinrichtung umfasst. Durch das Ermitteln des Fehlklassifikationswertes kann vorzugsweise herausgefunden werden, welche Gewichtung(en) für das Auftreten eines systematischen Fehlers ein jeweiliges Bildmerkmal und/oder eine jeweilige Werteangabe(n) umfasst.

In einer bevorzugten Ausführungsform wird, wenn der ermittelte Fehlklassifikationswert gleich dem vorbestimmten Fehlergrenzwert ist oder diesen übersteigt, der ermittelte systematische Fehler zu einer Liste systematischer Fehler hinzugefügt. Das System kann beispielsweise eine Erzeugungseinrichtung umfassen, die ausgebildet ist, eine derartige Liste der systematischen Fehler zu erzeugen. Die Erzeugungseinrichtung kann durch die Auswerte und Recheneinrichtung implementiert oder als separate Einheit bereitgestellt sein.

In einer bevorzugten Ausführungsform erfolgt ein Ermitteln des Fehlklassifikationswertes für jede der klassifizierten Bilddateien durch Abgleichen der durch den Klassifizierungsalgorithmus klassifizieren Bildkategorie mit der vorbestimmten Bildkategorie. Die Auswerte- und Recheneinrichtung kann eingerichtet sein, den Fehlklassifikationswert für jede der klassifizierten Bilder durch Abgleichen der durch den Klassifizierungsalgorithmus klassifizieren Bildkategorie mit der vorbestimmten Bildkategorie zu ermitteln. Das System kann hierzu auch eine eigenständige Einrichtung und/oder Einheit umfassen.

Das erfindungsgemäße Verfahren kann auch wie folgt beschrieben werden. Anfangs erfolgt vorzugsweise ein Bereitstellen des insbesondere vortrainierten Klassifizierungsalgorithmus f, ein Bereitstellen des insbesondere vortrainierten Text-In-Bildgenerierungsalgorithmus G sowie ein Bereitstellen der mindestens einen Eingabetextdatei bzw. Aufforderungsvorlage T, die neben dem mindestens einen Schlüsselwort über die Kategorie bzw. Klasse c vorzugsweise mindestens eine Angabe über ein Bildmerkmal A₁,...,Aₖⱼ und mindestens eine Werteangabe aⱼ₁, ..., a_{jMj} zu dem jeweiligen Bildmerkmal umfasst. Ferner erfolgt ein Bereitstellen der Liste an Bildmerkmalen A₁,...,Aₖⱼ und der jeweiligen Wertangaben aⱼ₁, ..., a_{jMj}. Besonders bevorzugt ist eine Angabe über eine Kardinalität n_{C} und/oder eine Angabe über einen vorbestimmten Fehlergrenzwert κ angegeben. Besonders bevorzugt erfolgt dann ein kombinatorisches Testen G auf der Grundlage der Attribute Aᵢ, der Attributwerte aᵢⱼ und der Kardinalität n_{C}. Ferner erfolgt vorzugsweise ein Erstellen einer (zunächst leere) Liste systematischer Fehler: E = {}. Wenn nun ein neuer Testfall g ∈ G in der kombinatorischen Testsuite (d.h. durch das kombinatorische Testen) generiert und/oder erzeugt wird, und dadurch existiert, erfolgt besonders bevorzugt ein Instanziieren der mindestens einen Eingabetextdatei T gemäß dem Testfall g. So wird die Textaufforderung t = T (g) erhalten. Besonders bevorzugt erfolgt ein Ziehen von R Stichproben aus dem Text-Bild-Modell x₁, ... x_{R} ~ G(t(g)). Besonders bevorzugt wird ein Fehlklassifikationswert und/oder eine Fehlklassifikationsrate f für die Stichproben ermittelt, wobei $f = 1 / R {\sum }_{i = 1}^{R} {1}_{f \left(xi\right) \neq ci}$. Besonders bevorzugt wird g als ermittelter systematischer Fehler zu der Liste E hinzugeführt, wenn f ≥ κ. Als Ausgabe erhält man erfindungsgemäß bevorzugt eine Liste an systematischen Fehlern E.

In einer bevorzugten Ausführungsform umfasst/umfassen der Klassifizierungsalgorithmus und/oder der Text-In-Bildgenerierungsalgorithmus jeweils Algorithmen des maschinellen Lernens, die vorzugsweise vortrainiert sind. Generell kann/können der Klassifizierungsalgorithmus und/oder der Text-In-Bildgenerierungsalgorithmus einen Algorithmus des maschinellen Lernens oder einen analytisch arbeitenden Algorithmus oder einen Mischalgorithmus umfassen. Der Klassifizierungsalgorithmus und/oder der Text-In-Bildgenerierungsalgorithmus können vorzugsweise durch Einbeziehung von Domänenwissen und/oder Expertenwissen und/oder gelabelten Trainingsdaten vortrainiert sein.

In einer bevorzugten Ausführungsform umfasst der Algorithmus des maschinellen Lernens ein Verfahren der polynomialen Regression und/oder ein Verfahren der Regression mittels eines insbesondere mehrschichtigen neuronalen Netzwerks. Auch andere Ansätze des maschinellen Lernens sind grundsätzlich möglich. Beispielsweise kann der Algorithmus des maschinellen Lernens zumindest teilweise als ein neuronales Netz und/oder als ein Algorithmus des überwachten Lernens und/oder als ein Algorithmus des teilüberwachten Lernens und/oder als ein Algorithmus des unüberwachten Lernens und/oder als ein Algorithmus des bestärkenden Lernens ausgebildet sein. Es können auch hybride Algorithmen eingesetzt werden, die mehrere Ansätze des maschinellen Lernens miteinander verknüpfen.

Die Erfindung betrifft ferner ein Computerprogramm mit Programmcode, um zumindest Teile des erfindungsgemäßen Verfahrens nach einer beliebigen Ausführungsform auszuführen, wenn das Computerprogramm auf einem Computer ausgeführt wird.

Die Erfindung betrifft ferner einen computerlesbaren Datenträger mit Programmcode eines Computerprogramms, um zumindest Teile des erfindungsgemäßen Verfahrens nach einer beliebigen Ausführungsform auszuführen, wenn das Computerprogramm auf einem Computer ausgeführt wird.

Die beschriebenen Ausgestaltungen und Weiterbildungen lassen sich beliebig miteinander kombinieren.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung.

### Kurze Beschreibung der Zeichnungen

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung.

Andere Ausführungsformen und viele der genannten Vorteile ergeben sich im Hinblick auf die Zeichnungen. Die dargestellten Elemente der Zeichnungen sind nicht notwendigerweise maßstabsgetreu zueinander gezeigt.

Es zeigen:
- Fig. 1: ein schematisches Flussdiagramm des erfindungsgemäßen Verfahrens;
- Fig. 2: eine schematische Darstellung von zu klassifizierenden, generisch erzeugten Bildern einer bestimmten Klasse c; und
- Fig. 3: ein schematisches Flussdiagramm eines Klassifizierungsverfahrens.

In den Figuren der Zeichnungen bezeichnen gleiche Bezugszeichen gleiche oder funktionsgleiche Elemente, Bauteile oder Komponenten, soweit nichts Gegenteiliges angegeben ist.

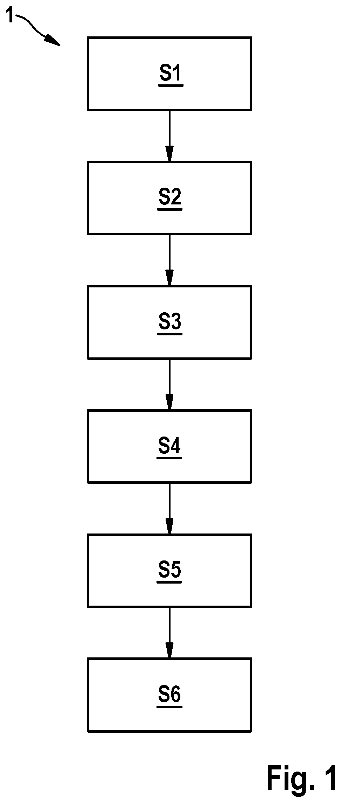

Figur 1 zeigt ein schematisches Flussdiagramm eines computerimplementierten Verfahrens zum Ermitteln mindestens eines systematischen Fehlers bei der Klassifikation von Bildern in mindestens eine Bildkategorie durch einen Klassifizierungsalgorithmus. Das Verfahren kann in einer beliebigen Ausführungsform zumindest teilweise durch ein System 1 ausgeführt werden, dass hierzu mehrere nicht näher dargestellte Komponenten, beispielsweise eine oder mehrere Bereitstellungseinrichtungen und/oder mindestens eine Auswerte- und Recheneinrichtung umfassen kann. Es versteht sich, dass die Bereitstellungseinrichtung gemeinsam mit der Auswerte- und Recheneinrichtung ausgebildet sein kann, oder von dieser unterschiedlich sein kann. Ferner kann das System eine Speichereinrichtung und/oder eine Ausgabeeinrichtung und/oder eine Anzeigeeinrichtung und/oder eine Eingabeeinrichtung umfassen.

Das computerimplementierte Verfahren umfasst erfindungsgemäß mindestes die folgenden Schritte:
In einem Schritt S1 ein Bereitstellen mindestens einer Eingabetextdatei, die mindestens ein Schüsselwort, ggf. auch mehrere insbesondere sich sinngemäß ergänzende Schlüsselwörter, umfasst, durch das die Eingabetextdatei einer vorbestimmten Bildkategorie einer Vielzahl von Bildkategorien zugeordnet ist. Die Eingabetextdatei umfasst dabei Angaben über mindestens ein Bildmerkmal, vorzugsweise Angaben über mehrere Bildmerkmale, zu der vorbestimmten Bildkategorie und mindestens eine Werteangabe zu dem mindestens einen Bildmerkmal. Beispielhaft kann hier als Eingabetextdatei "Ein Minivan der Farbe Orange vor schneebedeckten Bäumen" genannt werden, wobei "Minivan" das bildkategoriezuweisende Schlüsselwort ist, wobei "Farbe" ein erstes beispielhaftes Bildmerkmale ist, wobei "Orange" die Werteangabe zu diesem Bildmerkmal ist, wobei "Hintergrund" ein zweites beispielhaftes Bildmerkmal ist, und wobei "schneebedeckte Bäume" vorzugsweise eine insbesondere im Sinnzusammenhang verstandene Werteangabe zu diesem Bildmerkmal ist. Selbstredend ist die genannte Eingabetextdatei nur beispielhafter Natur. Im vorliegenden Beispiel ist die vorbestimmte Bildkategorie "Minivan".

In einem Schritt S2 erfolgt ein Bereitstelle einer Liste von Bildmerkmalen und jeweiligen Werteangaben zu jedem der Bildmerkmale.

In einem Schritt S3 erfolgt ein Anwenden von kombinatorischem Testen zum Ermitteln einer vorbestimmten Sequenz von Testfällen, die jeweils eine Subkombination der in der Liste umfassten Bildmerkmalen und/oder Werteangaben umfassen.

In einem Schritt S4 erfolgt ein Generieren mindestens einer Bilddatei durch einen Text-In-Bildgenerierungsalgorithmus, die ein der vorbestimmten Bildkategorie zugeordnetes synthetisches Bild mit gemäß einem der Testfälle umfasst. Bezogen auf das vorstehend genannte Beispiel einer Eingabetextdatei wird also ein Bild generiert, das einen Minivan umfasst.

In einem Schritt S5 erfolgt ein Klassifizieren des generierten, synthetischen Bildes durch den Klassifizierungsalgorithmus in mindestens eine der Vielzahl von Bildkategorien. Bezogen auf das oben genannte Beispiel wird das generierte Bild, das den orangenen Minivan umfasst, in eine Bildkategorie klassifiziert bzw. einer solchen Bildkategorie zugeordnet. Arbeitet der Klassifizierungsalgorithmus korrekt, sollte eigentlich eine Klassifizierung des generierten Bildes in die Kategorie "Minivan" erfolgen.

In einem Schritt S6 erfolgt ein Ermitteln des mindestens einen systematischen Fehlers durch Abgleichen der durch den Klassifizierungsalgorithmus klassifizieren Bildkategorie mit der vorbestimmten Bildkategorie. Beispielsweise kann es dazu kommen, dass der Klassifizierungsalgorithmus das generierte Bild mit dem orangenen Minivan fehlerhaft in eine andere Kategorie einordnen, da er beispielsweise durch den schneebedeckten Hintergrund und/oder die Farbgebung "Orange" fälschlicherweise nicht auf einen Minivan schließt, beispielsweise wenn der Klassifizierungsalgorithmus dies nicht im Zuge eines Trainings korrekt erlernt hat, da die bereitgestellten Trainingsdaten eine derartige Abbildung eines Minivans mit einer entsprechenden Labelung nicht umfassten. Zu einer derartig fehlerhaften Klassifizierung wird dann vorzugsweise ein Fehlklassifikationswert ermittelt, der beispielsweise im einfachsten Fall angibt, ob das Bild korrekt (nummerisch "1") oder nicht korrekt (nummerisch "0") klassifiziert wurde. Diese rückgekoppelte Überprüfung ist bevorzugt möglich, da die synthetisch generierten Bilder eine dem Schlüsselwort entsprechende, eindeutige Angabe zu der vorbestimmten Bildkategorie umfassen, und zwar bevor das Bild generiert ist und durch den Klassifizierungsalgorithmus klassifiziert wird.

In mathematischer Hinsicht geht man erfindungsgemäß von einem vortrainierten (Bild-) Klassifizierungsalgorithmus f: X → C aus, der ein Bild x ∈ X einer Klasse c ∈ C zuordnet. Ferner sind vorzugsweise Bilder bereitgestellt, die einer Verteilung x ~ D stammen und für die C eine Basiswahrheitswert ist, d.h. mit anderen Worten ist jedes der bereitgestellten Bilder eindeutig der Kategorie c zugeordnet.

Von Interesse ist erfindungsgemäß ein systematischer Fehler von f, d. h. für Teilmengen i = 1 ... K von Daten X⁽ⁱ⁾ ⊂ X, die vorzugsweise mindestens eine der folgenden Bedingungen erfüllen:
(i) eine hinreichende Wahrscheinlichkeit eines Auftretens des systematischen Fehlers unter $D : \left[{\int }_{x ϵ X \left(i\right)} {p}_{D} \left(x\right)\right] > ε$; und/oder
(ii) eine gleiche Grundwahrheitsklasse c für X⁽ⁱ⁾: ∃c : C(x) = c ∀x ∈ X⁽ⁱ⁾;
(iii) eine hohe Fehlerwahrscheinlichkeit von f auf X⁽ⁱ⁾: P[f(x) *X*^{(*i*)} : $ℙ \left[f\left(x\right)\neq C\left(x\right)\right] \geq κ$; und/oder
(iv) alle Daten von X⁽ⁱ⁾ haben bestimmte Eigenschaften.

Die letzte Bedingung (vi) kann zum Beispiel durch eine entsprechende Merkmalsklassifikation Aⱼ realisiert werden, die den Daten x Attribute a = Aⱼ(x) zuordnen. In diesem Fall kann die Bedingung (iv) vorzugsweise als ∃j, a : Aⱼ(x) = a ∀x ∈ X⁽ⁱ⁾ interpretiert werden.

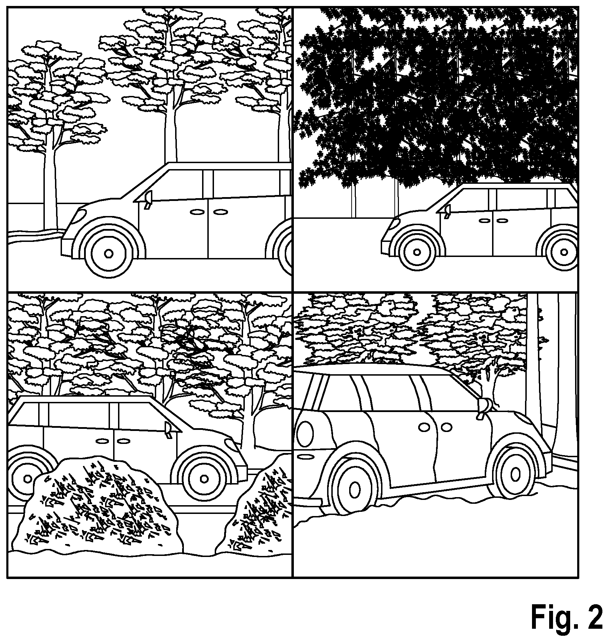

Ferner wird erfindungsgemäß von einem bereitgestellten Text-In-Bildgenerierungsalgorithmus g : T × N → X ausgegangen, beispielsweise von dem bekannten Text-In-Bildgenerierungsalgorithmus "Stable Diffusion" (https://huggingface.co/CompVis/stable-diffusion). Hierbei ist vorzugsweise t ∈ T eine Eingabetextdatei bzw. Text-Prompt und n ∈ N vorzugsweise mindestens eine zufällig ausgewählte Störgröße. Alternativ kann dies als eine Verteilung x ~ G(t) betrachtet werden, wobei die mindestens eine Störgröße vorzugsweise Teil der Verteilung ist und die Verteilung vorzugsweise von der Eingabetextdatei bzw. der damit verbundenen Textaufforderung t abhängt. Wenn g so trainiert wurde, dass es Daten aus D (oder einer ähnlichen Verteilung) erzeugt, wird x ~ G(t) vorzugsweise derart erzeugt, dass die obige Bedingung (i) für Daten aus G(t) erfüllt ist. Wenn die Textaufforderung entsprechend gestaltet ist, gehört x ~ G(t) vorzugsweise zu einer Zielklasse c, d. h. C(x) = c mit mindestens einem Merkmale a = Aⱼ(x). Dies erfüllt vorzugsweise die Bedingungen (ii) und (iv). Zu einer Eingabetextdatei bzw. Eingabeaufforderung, wie "Ein Bild eines Minivans mit der Farbe Orange und dem Hintergrund verschneiter Bäume" werden beispielsweise Bilder der Klasse "Minivan" erzeugen, bei denen das Attribut A_{Farbe} den Wert "Orange" hat und das Attribut A_{Hintergrund} den Wert "verschneite Bäume" hat (vgl. Fig. 2).

Die spezifische Gestaltung von Eingabetextdateien bzw. Eingabetextaufforderung (auch Prompts), beispielsweise eine Vorlage T, die die Kodierung verschiedener Kombinationen von Klasse C (x) = c und Attributwerten aⱼ₁ = Aⱼ₁ (x),..., aⱼₖ = Aⱼₖ (x) ermöglichen, ist vorzugsweise flexibel gestaltbar, profitiert aber vorzugsweise von einer gewissen Erfahrung bzw. einem gewissen Vorwissen bei der Gestaltung von Prompts für Modell g. Eine Option für eine solche Eingabetextdatei kann "Ein Bild der Klasse c mit Aⱼ₁ und Aⱼ₂" lauten. Auf diese Weise lässt sich die obige Eingabetextaufforderung "Ein Bild eines Minivans mit der Farbe Orange und dem Hintergrund verschneiter Bäume" für c ="ein Minivan" und Aⱼ₁ ="Farbe" und aⱼ₁ ="Orange" und Aⱼ₂ ="Hintergrund" und aⱼ₂ ="verschneite Bäume" instanziieren.

Bei einer bevorzugten Vorlageninstanziierung einer solchen Eingabetextdatei bzw. Eingabetextaufforderung wächst der Raum zur Strukturierung einer solchen Eingabetextdatei kombinatorisch mit der Anzahl der möglichen Attribute Aⱼ , j = 1 ... Kⱼ. Mit zunehmender Anzahl an Merkmalen wird es schwierig, eine Merkmalskombination zu erhalten, die eine hohe Fehlklassifizierungsrate aufweist und somit zu einem systematischen Fehler im Sinne der Bedingung (iii) führt. Um dieses Problem zu lösen, ist erfindungsgemäß die Verwendung eines kombinatorischen Tests vorgeschlagen. Dabei werden nicht alle möglichen Attributkombinationen getestet, sondern nur eine bevorzugte Teilmenge von Testfällen erzeugt. Für eine vom Benutzer gewählte Kardinalität n_{C} stellen kombinatorische Tests sicher, dass für jede beliebige Kombination von Werten beliebiger n_{C} Attribute mindestens ein Testfall existiert, der diese Attribute aufweist.

An einem Beispiel erläutert bedeutet dies: Angenommen, es gibt drei verschiedene Bildmerkmale bzw. Bildattribute A mit den Werteangaben a₁, a₂, a₃, B mit den Werteangaben b₁, b₂, b₃ und C mit den Werteangaben c₁, c₂, c₃. Ferner ist die Kardinalität n_{C} = 2 gesetzt für das kombinatorische Testen. Für n_{C} = 2 gibt es nun für jeden (aᵢ,bⱼ) einen Testfall mit diesen Werteangaben, für jeden (aᵢ,cⱼ) einen Testfall mit diesen Werteangaben und für jeden (bᵢ,cⱼ) einen Testfall mit diesen Werteangaben (für beliebige i,j). Das kombinatorische Testen gibt jedoch vorzugsweise keinen Testfall für die Kombination (aᵢ,bⱼ,cⱼ) aus, da n_{C} = 2 gesetzt wurde und somit nur eine Subkombination möglicher Kombinationen erzeugt wurde. Anstatt nur einen einzigen systematischen Fehler zu identifizieren, ermöglicht das kombinatorische Testen außerdem das Auffinden einer großen Teilmenge systematischer Fehler, bevorzugt wenn diese oberhalb einer bestimmten Fehlerschwelle liegen.

In Figur 2 sind beispielhaft vier synthetisch generierte Bilder dargestellt, die allesamt die Bildkategorie "Minivan" zeigen, wobei zwischen den Bildern mindestens ein Bildmerkmal und/oder eine Werteangabe zu einem betreffenden Bildmerkmal variiert wurde. Beispielsweise zeigt das oben links gezeigte Bild einen orangenen Minivan vor einem Hintergrund mit weiß verschneiten Laubbäumen, wobei der Hintergrund fast vollständig weiß in weiß erscheint. Beispielsweise zeigt das Bild oben rechts einen orangenen Minivan vor einem Hintergrund mit verschneiten Nadelbäumen, wobei der Hintergrund relativ zu dem linken oberen Bild deutlich dunkler erscheint. Beispielsweise zeigt das Bild unten links einen orangenen Minivan von einem Hintergrund mit verschneiten Laubbäumen, wobei in einer Bildebene vor dem Minivan Hecken ersichtlich sind. Beispielsweise zeigt das Bild unten rechts einen orangenen Minivan vor einem Hintergrund verschneiter Bäume, der sich ebenfalls von den restlichen Hintergründen unterscheidet. Es unterscheidet sich zudem die jeweilige Anordnung des Minivans im jeweiligen Bild.

Es kann nun beispielsweise sein, dass der Klassifizierungsalgorithmus das obere linke Bild aufgrund des Hintergrundes, der im Vergleich zu den anderen Bildhintergründen weiß in weiß erscheint, fehlerhaft klassifiziert und so beispielsweise nicht der Bildkategorie "Minivan", sondern beispielsweise einer fehlerhaften Bildkategorie "Schneepflug" zuweist. Erfindungsgemäß kann dieser systematische Klassifizierungsfehler erkannt werden.

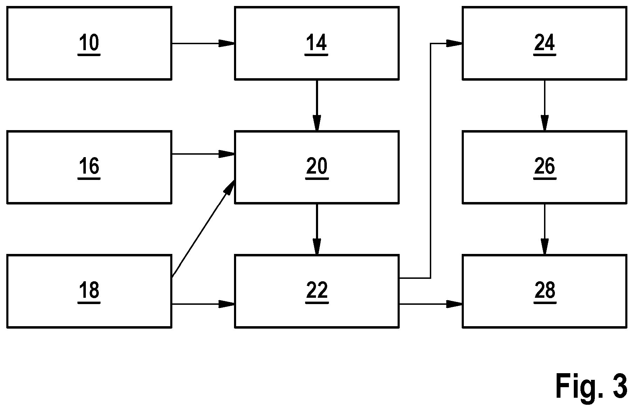

Figur 3 beschreibt ein schematisches Blockdiagramm. Ein Domainexperte und/oder ein Anwender und/oder ein Fachexperte definiert eine Liste 10 mit Bildmerkmalen insbesondere in Form von semantischen Dimensionen und mögliche Werteangaben für diese Dimensionen. Am Beispiel des Minivans können als Bildmerkmale beispielsweise eine Blickrichtung mit beispielhaften Werteangaben "frontal, rückseitig, seitlich, etc.", eine Farbe mit beispielhaften Werteangaben "Rot, Grün, Blau, Orange, etc.", ein Wetter im Hintergrund mit den Wertangaben "sonnig, regnerisch, verschneit, etc.", und ein Hintergrund mit den Werteangaben "See, Haus, Bäume, etc." umfassen. Aus dieser Liste 10 wird mittels kombinatorischem Testen 12 eine Sequenz von Testfällen 14 erzeugt, die eine Kombinationsauswahl aus der Liste umfassen, beispielhaft ein Testfall mit der Blickrichtung "rückseitig", der Farbe "Orange", dem Wetter "verschneif" und dem Hintergrund "Bäume".

Ferner wird eine Eingabetextdatei-Vorlage 16 bereitgestellt, die beispielsweise ein Variablenformat "{Blickrichtung} eines {Farbe} {Klasse C} vor eine {Wetter} {Hintergrund}" umfasst. Diese Eingabetextdatei-Vorlage 16 ist selbstverständlich rein beispielhaft zu verstehen.

Ferner wird eine Quellklasse C bzw. eine Bildkategorie 18, beispielsweise {Klasse C} = "Minivan" als Eingabegröße bereitgestellt.

Auf der Grundlage des jeweiligen Testfalls 14, der Eingabetextdatei-Vorlage 16, und der Quellklasse 18 wird ein Eingabetextdatei 20 erzeugt, beispielhaft in Form von "rückseitige Ansicht eines orangenen Minivans vor verschneiten Bäumen".

Durch Abfrage eines Text-In-Bild-Generierungsalgorithmus 22, wie beispielsweise Stable Diffusion, wird auf der Grundlage dieser Eingabetextdatei 20 eine jeweilige Bilddatei 24 generiert.

Die jeweilige Bilddatei 24 wird als Eingabe für einen Klassifizierungsalgorithmus 26 bereitgestellt.

Die Vorhersagen des Klassifizierungsalgorithmus 26 werden vorzugsweise mit Hilfe einer Zielfunktion 28 insbesondere unter Verwendung robuster Statistiken mit der Quellenklasse C bzw. 22 verglichen. Eine große Abweichung zwischen der Ausgangsklasse und den Vorhersagen deutet vorzugsweise auf einen möglichen systematischen Fehler hin.

## Patentansprüche

1. Computerimplementiertes Verfahren zum Ermitteln mindestens eines systematischen Fehlers bei der Klassifikation von Bildern in mindestens eine Bildkategorie durch einen Klassifizierungsalgorithmus, das Verfahren umfassend mindestens die Schritte:
- Bereitstellen (S1) mindestens einer Eingabetextdatei-Vorlage, die mindestens ein Schüsselwort umfasst, durch das die Eingabetextdatei-Vorlage einer vorbestimmten Bildkategorie einer Vielzahl von Bildkategorien zugeordnet ist, wobei die Eingabetextdatei-Vorlage Angaben über mindestens ein Bildmerkmal zu der vorbestimmten Bildkategorie und mindestens eine Werteangabe zu dem mindestens einen Bildmerkmal umfasst;
- Bereitstellen (S2) einer Liste von Bildmerkmalen und jeweiligen Werteangaben zu jedem der Bildmerkmale;
- Anwenden (S3) von kombinatorischem Testen zum Ermitteln einer vorbestimmten Sequenz von Testfällen, die jeweils eine Subkombination der in der Liste umfassten Bildmerkmalen und/oder Werteangaben umfassen;
- Generieren (S4) mindestens einer Bilddatei durch einen Text-In-Bildgenerierungsalgorithmus auf der Grundlage einer Eingabetextdatei, die durch ein Einsetzen der jeweiligen Subkombination der von der Liste umfassten Bildmerkmale und/oder Werteangaben in die mindestens eine Eingabetextdatei-Vorlage erzeugt wird, wobei die mindestens eine Bilddatei ein der vorbestimmten Bildkategorie zugeordnetes synthetisches Bild gemäß einem der Testfälle umfasst;
- Klassifizieren (S5) des generierten, synthetischen Bildes durch den Klassifizierungsalgorithmus in mindestens eine der Vielzahl von Bildkategorien; und
- Ermitteln (S6) des mindestens einen systematischen Fehlers durch Abgleichen der durch den Klassifizierungsalgorithmus klassifizierten Bildkategorie mit der vorbestimmten Bildkategorie, wobei für das kombinatorische Testen vom Benutzer eine Kardinaliät gewählt wird und die Sequenz von Testfällen so erzeugt wird, dass auf der Grundlage der bereitgestellten Liste von Bildmerkmalen und jeweiligen Werteangaben für jede beliebige Kombination von Werteangaben beliebiger Bildmerkmale, bei der die Zahl der Bildmerkmale der von Benutzer gewählten Kardinalität entspricht, mindestens ein Testfall existiert, der diese Kombination von Werteangaben aufweist, und dass kein Testfall für eine Kombination von Werteangaben erzeugt wird, bei der die Zahl der jeweiligen Bildmerkmale ungleich der vom Benutzer gewählten Kardinalität ist.

2. Computerimplementiertes Verfahren nach Anspruch 1, wobei mehrere Eingabetextdateien bereitgestellt werden, die jeweils das der vorbestimmten Bildkategorie zugeordnete Schlüsselwort umfassen, und bei denen die jeweilige Angabe über das mindestens eine Bildmerkmal und/oder die jeweilige mindestens eine Werteangabe zu dem jeweiligen Bildmerkmal gemäß der durch das kombinatorische Testen ermittelten Sequenz von Testfällen variiert wird/werden; wobei zu jeder der mehreren Eingabetextdateien jeweils eine Bilddatei generiert wird, die ein der vorbestimmten Bildkategorie zugeordnetes synthetisches Bild mit dem jeweiligen mindestens einen Bildmerkmal und der jeweiligen mindestens einen Werteangabe umfasst; wobei jedes der generierten, synthetischen Bilder durch den Klassifizierungsalgorithmus in mindestens eine der Vielzahl von Bildkategorien klassifiziert wird, und wobei zu jedem der klassifizierten Bilder der mindestens eine systematische Fehler ermittelt wird.

3. Computerimplementiertes Verfahren nach Anspruch 2, wobei das Verfahren ferner die Schritte umfasst:
- Abspeichern des mindestens einen systematischen Fehlers zu der jeweiligen Eingabetextdatei.

4. Computerimplementiertes Verfahren nach Anspruch 2 oder 3, wobei das Ermitteln (S6) des mindestens einen systematischen Fehlers ein Ermitteln eines jeweiligen Fehlklassifikationswertes und vorzugsweise ein Abgleiches des jeweils ermittelten Fehlklassifikationswertes mit einem vorbestimmten Fehlergrenzwert umfasst.

5. Computerimplementiertes Verfahren nach Anspruch 4, wobei, wenn der ermittelte Fehlklassifikationswert gleich dem vorbestimmten Fehlergrenzwert ist oder diesen übersteigt, der ermittelte systematische Fehler zu einer Liste systematischer Fehler hinzugefügt wird.

6. Computerimplementiertes Verfahren nach einem der vorhergehenden Ansprüche, wobei der Klassifizierungsalgorithmus und/oder der Text-In-Bildgenerierungsalgorithmus jeweils Algorithmen des maschinellen Lernens umfassen, die vorzugsweise vortrainiert sind.

7. System (1) zum Ermitteln mindestens eines systematischen Fehlers bei der Klassifikation von Bildern in mindestens eine Bildkategorie durch einen Klassifizierungsalgorithmus, wobei das System umfasst:
- eine Bereitstellungseinrichtung, die ausgebildet ist, mindestens eine Eingabetextdatei-Vorlage, die mindestens ein Schüsselwort umfasst, durch das die Eingabetextdatei-Vorlage einer vorbestimmten Bildkategorie einer Vielzahl von Bildkategorien zugeordnet ist, bereitzustellen, wobei die Eingabetextdatei-Vorlage Angaben über mindestens ein Bildmerkmal zu der vorbestimmten Bildkategorie und mindestens eine Werteangabe zu dem mindestens einen Bildmerkmal umfasst; und die ausgebildet ist, eine Liste von Bildmerkmalen und jeweiligen Werteangaben zu jedem der Bildmerkmale bereitzustellen; und
- eine Auswerte- und Recheneinrichtung, die eingerichtet ist:
∘ kombinatorisches Testen zum Ermitteln einer vorbestimmten Sequenz von Testfällen anzuwenden, die jeweils eine Subkombination der in der Liste umfassten Bildmerkmalen und/oder Werteangaben umfassen;
∘ einen Text-In-Bildgenerierungsalgorithmus auszuführen, um mindestens eine Bilddatei durch einen Text-In-Bildgenerierungsalgorithmus auf der Grundlage einer Eingabetextdatei
zu generieren, die durch ein Einsetzen der jeweiligen Subkombination der von der Liste umfassten Bildmerkmale und/oder Werteangaben in die mindestens eine Eingabetextdatei-Vorlage erzeugt wird, wobei die mindestens eine Bilddatei ein der vorbestimmten Bildkategorie zugeordnetes synthetisches Bild gemäß einem der Testfälle umfasst;
∘ einen Klassifizierungsalgorithmus auszuführen, um das generierte, synthetische Bild in mindestens eine der Vielzahl von Bildkategorien zu klassifizieren; und
∘ den mindestens einen systematischen Fehler durch Abgleichen der durch den Klassifizierungsalgorithmus klassifizierten Bildkategorie mit der vorbestimmten Bildkategorie zu ermitteln, wobei für das kombinatorische Testen vom Benutzer eine Kardinaliät gewählt wird und die Sequenz von Testfällen so erzeugt wird, dass auf der Grundlage der bereitgestellten Liste von Bildmerkmalen und jeweiligen Werteangaben für jede beliebige Kombination von Werteangaben beliebiger Bildmerkmale, bei der die Zahl der Bildmerkmale der vom Benutzer gewählten Kardinalität entspricht, mindestens ein Testfall existiert, der diese Kombination von Werteangaben aufweist, und dass kein Testfall für eine Kombination von Werteangaben erzeugt wird, bei der die Zahl der jeweiligen Bildmerkmale ungleich der vom Benutzer gewählten Kardinalität ist.

8. Computerprogramm mit Programmcode, um das Verfahren nach einem der Ansprüche 1 bis 6 auszuführen, wenn das Computerprogramm auf einem Computer ausgeführt wird.

9. Computerlesbarer Datenträger mit Programmcode eines Computerprogramms, um das Verfahren nach einem der Ansprüche 1 bis 6 auszuführen, wenn das Computerprogramm auf einem Computer ausgeführt wird.

## Claims

1. Computer-implemented method for ascertaining at least one systematic error in the classification of images into at least one image category by a classification algorithm, the method comprising at least the following steps:
- providing (S1) at least one input text file template comprising at least one keyword by way of which the input text file template is assigned to a predetermined image category from a plurality of image categories, wherein the input text file template comprises information about at least one image feature in relation to the predetermined image category and at least one value for the at least one image feature;
- providing (S2) a list of image features and respective values for each of the image features;
- applying (S3) combinatorial testing in order to ascertain a predetermined sequence of test cases that each comprise a subcombination of the image features and/or values contained in the list;
- generating (S4) at least one image file by way of a text-in-image generation algorithm based on an input text file generated by inserting the respective subcombination of the image features and/or values contained in the list into the at least one input text file template, wherein the at least one image file comprises a synthetic image assigned to the predetermined image category according to one of the test cases;
- classifying (S5) the generated synthetic image into at least one of the plurality of image categories by way of the classification algorithm; and
- ascertaining (S6) the at least one systematic error by comparing the image category classified by the classification algorithm with the predetermined image category, wherein a cardinality is selected by the user for the combinatorial testing, and the sequence of test cases is generated such that, on the basis of the provided list of image features and respective values, there is at least one test case, for any combination of values of any image features in which the number of image features corresponds to the cardinality selected by the user, which includes this combination of values, and in that no test case is generated for a combination of values in which the number of respective image features is different from the cardinality selected by the user.

2. Computer-implemented method according to Claim 1, wherein provision is made for multiple input text files each comprising the keyword assigned to the predetermined image category and in which the respective information about the at least one image feature and/or the respective at least one value for the respective image feature are/is varied in accordance with the sequence of test cases ascertained by the combinatorial testing; wherein a respective image file is generated for each of the multiple input text files, said image file comprising a synthetic image that is assigned to the predetermined image category and comprises the respective at least one image feature and the respective at least one value; wherein each of the generated synthetic images is classified by the classification algorithm into at least one of the plurality of image categories, and wherein the at least one systematic error is ascertained for each of the classified images.

3. Computer-implemented method according to Claim 2, wherein the method furthermore comprises the following steps:
- storing the at least one systematic error in relation to the respective input text file.

4. Computer-implemented method according to Claim 2 or 3, wherein ascertaining (S6) the at least one systematic error comprises ascertaining a respective misclassification value and preferably comparing the respectively ascertained misclassification value with a predetermined error threshold.

5. Computer-implemented method according to Claim 4, wherein, when the ascertained misclassification value is equal to or exceeds the predetermined error threshold, the ascertained systematic error is added to a list of systematic errors.

6. Computer-implemented method according to one of the preceding claims, wherein the classification algorithm and/or the text-in-image generation algorithm each comprise machine learning algorithms that are preferably pretrained.

7. System (1) for ascertaining at least one systematic error in the classification of images into at least one image category by a classification algorithm, wherein the system comprises:
- a provision device designed to provide at least one input text file template comprising at least one keyword by way of which the input text file template is assigned to a predetermined image category from a plurality of image categories, wherein the input text file template comprises information about at least one image feature in relation to the predetermined image category and at least one value for the at least one image feature; and designed to provide a list of image features and respective values for each of the image features; and
- an evaluation and computing device that is configured:
∘ to apply combinatorial testing in order to ascertain a predetermined sequence of test cases that each comprise a subcombination of the image features and/or values contained in the list;
∘ to execute a text-in-image generation algorithm in order to generate at least one image file by way of a text-in-image generation algorithm based on an input text file
generated by inserting the respective subcombination of the image features and/or values contained in the list into the at least one input text file template, wherein the at least one image file comprises a synthetic image assigned to the predetermined image category according to one of the test cases;
∘ to execute a classification algorithm in order to classify the generated synthetic image into at least one of the plurality of image categories; and
∘ to ascertain the at least one systematic error by comparing the image category classified by the classification algorithm with the predetermined image category, wherein a cardinality is selected by the user for the combinatorial testing, and the sequence of test cases is generated such that, on the basis of the provided list of image features and respective values, there is at least one test case, for any combination of values of any image features in which the number of image features corresponds to the cardinality selected by the user, which includes this combination of values, and in that no test case is generated for a combination of values in which the number of respective image features is different from the cardinality selected by the user.

8. Computer program comprising program code for carrying out the method according to one of Claims 1 to 6 when the computer program is executed on a computer.

9. Computer-readable data carrier comprising program code of a computer program for carrying out the method according to one of Claims 1 to 6 when the computer program is executed on a computer.

## Revendications

1. Procédé mis en œuvre par ordinateur pour déterminer au moins une erreur systématique lors de la classification d'images dans au moins une catégorie d'images au moyen d'un algorithme de classification, le procédé comprenant au moins les étapes suivantes :
- fourniture (S1) d'au moins un modèle de fichier texte d'entrée comprenant au moins un mot-clé par lequel le modèle de fichier texte d'entrée est associé à une catégorie d'images prédéterminée d'une multiplicité de catégories d'images, le modèle de fichier texte d'entrée comprenant des indications relatives à au moins une caractéristique d'image relative à la catégorie d'images prédéterminée et au moins une indication de valeur relative à ladite au moins une caractéristique d'image ;
- fourniture (S2) d'une liste de caractéristiques d'image et d'indications de valeur respectives pour chacune des caractéristiques d'image ;
- application (S3) d'un test combinatoire pour déterminer une séquence prédéterminée de cas de test, qui comprennent respectivement une sous-combinaison des caractéristiques d'image et/ou d'indications de valeur comprises dans la liste ;
- génération (S4) d'au moins un fichier d'image par un algorithme de génération de texte dans l'image sur la base d'un fichier texte d'entrée, qui est généré en insérant la sous-combinaison respective des caractéristiques d'image et/ou des indications de valeur comprises dans la liste dans ledit au moins un modèle de fichier texte d'entrée, ledit au moins un fichier d'image comprenant une image synthétique qui est associée à la catégorie d'images prédéterminée selon l'un des cas de test ;
- classification (S5) de l'image synthétique générée au moyen de l'algorithme de classification dans au moins l'une de la multiplicité de catégories d'images ; et
- détermination (S6) de ladite au moins une erreur systématique par comparaison de la catégorie d'images classée par l'algorithme de classification avec la catégorie d'images prédéterminée, une cardinalité étant choisie par l'utilisateur pour le test combinatoire et la séquence de cas de test étant générée de telle sorte que, sur la base de la liste fournie de caractéristiques d'image et d'indications de valeur respectives, pour n'importe quelle combinaison d'indications de valeur de caractéristiques d'image pour laquelle le nombre de caractéristiques d'image correspond à la cardinalité choisie par l'utilisateur, il existe au moins un cas de test qui présente cette combinaison d'indications de valeur, et qu'aucun cas de test ne soit généré pour une combinaison d'indications de valeur pour laquelle le nombre des caractéristiques d'image respectives est différent de la cardinalité choisie par l'utilisateur.

2. Procédé mis en œuvre par ordinateur selon la revendication 1, dans lequel une pluralité de fichiers texte d'entrée sont fournis, chacun comprenant le mot-clé associé à la catégorie d'images prédéterminée, et dans lequel l'indication respective de ladite au moins une caractéristique d'image et/ou ladite au moins une indication de valeur respective relative à la caractéristique d'image respective est/sont amenée(s) à varier en fonction de la séquence de cas de test déterminée par le test combinatoire ; dans lequel, pour chacun de la pluralité de fichiers texte d'entrée, il est respectivement généré un fichier d'image comprenant une image synthétique associée à la catégorie d'images prédéterminée et ayant ladite au moins une caractéristique d'image respective et ladite au moins une indication de valeur respective ; dans lequel chacune des images synthétiques générées est classée dans au moins l'une de la multiplicité de catégories d'images au moyen de l'algorithme de classification, et ladite au moins une erreur systématique est déterminée pour chacune des images classées.

3. Procédé mis en œuvre par ordinateur selon la revendication 2, le procédé comprenant en outre l'étape suivante :
- mémorisation de ladite au moins une erreur systématique pour le fichier texte d'entrée respectif.

4. Procédé mis en œuvre par ordinateur selon la revendication 2 ou 3, dans lequel la détermination (S6) de ladite au moins une erreur systématique comprend une détermination d'une valeur de classification incorrecte respective et de préférence une comparaison de la valeur de classification incorrecte respectivement déterminée avec une valeur limite d'erreur prédéterminée.

5. Procédé mis en œuvre par ordinateur selon la revendication 4, dans lequel, lorsque la valeur d'erreur de classification déterminée est égale à la valeur limite d'erreur prédéterminée ou dépasse celle-ci, l'erreur systématique déterminée est ajoutée à une liste d'erreurs systématiques.

6. Procédé mis en œuvre par ordinateur selon l'une quelconque des revendications précédentes, dans lequel l'algorithme de classification et/ou l'algorithme de génération de texte dans l'image comprennent respectivement des algorithmes d'apprentissage automatique, qui sont de préférence pré-entraînés.

7. Système (1) pour déterminer au moins une erreur systématique lors de la classification d'images dans au moins une catégorie d'images au moyen d'un algorithme de classification, le système comprenant :
- un dispositif de fourniture qui est conçu pour fournir au moins un modèle de fichier texte d'entrée comprenant au moins un mot-clé par lequel le modèle de fichier texte d'entrée est associé à une catégorie d'images prédéterminée d'une multiplicité de catégories d'images, le modèle de fichier texte d'entrée comprenant des indications relatives à au moins une caractéristique d'image relative à la catégorie d'images prédéterminée et au moins une indication de valeur relative à ladite au moins une caractéristique d'image ; et qui est configuré pour fournir une liste de caractéristiques d'image et d'indications de valeur respectives pour chacune des caractéristiques d'image ; et
- un dispositif d'évaluation et de calcul qui est conçu pour :
∘ appliquer un test combinatoire pour déterminer une séquence prédéterminée de cas de test, qui comprennent respectivement une sous-combinaison des caractéristiques d'image et/ou d'indications de valeur comprises dans la liste ;
∘ exécuter un algorithme de génération de texte dans l'image afin de générer au moins un fichier d'image au moyen d'un algorithme de génération de texte dans l'image sur la base d'un fichier texte d'entrée,
qui est généré en insérant la sous-combinaison respective des caractéristiques d'image et/ou des indications de valeur comprises dans la liste dans ledit au moins un modèle de fichier texte d'entrée, ledit au moins un fichier d'image comprenant une image synthétique associée à la catégorie d'images prédéterminée selon l'un des cas de test ;
∘ exécuter un algorithme de classification pour classifier l'image synthétique générée dans au moins l'une de la multiplicité de catégories d'images ; et
∘ déterminer ladite au moins une erreur systématique par comparaison de la catégorie d'images classée par l'algorithme de classification avec la catégorie d'images prédéterminée, une cardinalité étant choisie par l'utilisateur pour le test combinatoire et la séquence de cas de test étant générée de telle sorte que, sur la base de la liste fournie de caractéristiques d'image et d'indications de valeur respectives, pour n'importe quelle combinaison d'indications de valeur de caractéristiques d'image pour laquelle le nombre de caractéristiques d'image correspond à la cardinalité choisie par l'utilisateur, il existe au moins un cas de test qui présente cette combinaison d'indications de valeur, et qu'aucun cas de test ne soit généré pour une combinaison d'indications de valeur pour laquelle le nombre des caractéristiques d'image respectives est différent de la cardinalité choisie par l'utilisateur.

8. Programme informatique comprenant un code de programme pour mettre en œuvre le procédé selon l'une quelconque des revendications 1 à 6 lorsque le programme informatique est exécuté sur un ordinateur.

9. Support de données lisible par ordinateur comprenant un code de programme pour mettre en œuvre le procédé selon l'une quelconque des revendications 1 à 6 lorsque le programme informatique est exécuté sur un ordinateur.
